# EUROPEAN PATENT SPECIFICATION

(11) **EP 0 278 544 B1**
(45) Date of publication and mention of the grant of the patent: **24.03.1993**
(21) Application number: 88200062.3
(22) Date of filing: 15.01.1988
(51) Int. Cl.: H02G 3/22, H01B 17/58

(54) **Sealing device**
Dichtungsvorrichtung
Dispositif d'étanchéite

(30) Priority: 28.01.1987 NL 8700204
(43) Date of publication of application: 17.08.1988
(73) Proprietor: Pidou B.V., 1716 KE Opmeer (NL)
(72) Inventor: Meyer-Swantée, Klaus Bertil, NL-3755 MT Eemnes (NL)
(74) Representative: Hooiveld, Arjen Jan Winfried

(56) References cited:
- FR-A- 1 221 728
- FR-A- 2 130 123
- GB-A- 885 191
- GB-A- 2 057 595
- US-A- 3 580 988

## Description

The invention relates to a system for the sealing passage of a cable, pipe and the like through an opening in a wall or similar barrier, comprising a sealing device made of a resilient material such as rubber and provided with at least one, substantially cylindrical, continuous duct, the outer surface of the sealing device being covered with peripheral, axially spaced substantially inflexible but compressible ridges aligned in radial sections.

Such a system is known from the British patent document No. 2,057,595. The sealing device of this known system has an inner sleeve and an outer sleeve joined by a flexible elastic web, which forms a barrier against fluid flow in the axial direction in the gap between the sleeves. Preferably two such sealing devices will be placed axially back to back on a single duct with their webs adjacent.

Disadvantages of the known system are that in actual practice it proves not to have a good sealing effect, for a sealing is effected directly on (the outer surfaces of) cables to be passed through, that there is no possibility for the sealing passage of more than one cable, for example with different diameters, and that a sealing is effected after a sealing device of the known system has been installed, which makes it very complicated to sealingly install new cables and to remove old cables (without damaging the sealing passage of cables not to be removed) for example.

A sealing system is also known from the United States patent No. 3,424,857. The resilient grommet described therein tapes somewhat on one side and has an internal circular axial groove. This groove forms a void which permits the outer walls of the grommet to be readily collapsed when the grommet is inserted in a hole, for instance in a wall. The known grommet also contains continuous cylindrical ducts through which cylindrical wires may be passed. To ensure a good sealing passage, the wires have been passed through and cemented in the grommet with the aid of a suitable adhesive or cement. The diameter of a duct is preferably smaller than the diameter of a wire. In addition, the known grommet is provided at its outer surface with a circular outer groove which engages the edges in, for instance, a wall.

A disadvantage of the grommet known from the United States patent No. 3,424,857 is that in actual practice it proves not to have a good sealing effect. In particular, leaks are apt to occur between the edges of the opening in the wall and the outer surface of the grommet, and also between the outer surface of the electric wires and the inner surface of the ducts. A further drawback is that the known grommet proves to have no compressive strenght.

An objective of the present invention is to provide a pressure-resistant system for the sealing passage of a cable, pipe and the like through an opening in a wall or similar barrier, with a good sealing effect, precluding the occurrence of leaks.

To achieve this object, a system of the type delineated in the opening paragraph and defined in Claim 1 is characterized in that the outside diameter of the ridges is greater than the inside diameter of the opening, that the inner wall of the at least one duct is smooth-walled, and that the system further comprises a lead-through bushing comprising segmental parts to be disposed round the cable or pipe and the like to be passed through, which lead-through bushing can be placed sealingly into the at least one duct. As the outside diameter of the ridges on the sealing device exceeds the diameter of the hole to be sealed, these ridges will be somewhat compressed during use of the sealing device and, because of the pressure-resistant and good sealing effect, forced tight against the edges of the hole in, for instance, a wall. In a smooth-walled duct of a sealing device according to the invention, a lead-through bushing according to the United States patent No. 4,293,138 can be applied to advantage. The circumferential, substantially inflexible ridges aligned in radial sections on the outer surface of this known lead-through bushing should preferably have an outside diameter exceeding the inside diameter of a duct of the present sealing device. As a result thereof, a leakproof, pressure-resistant seal is obtained.

As has already been indicated in the aforesaid United States patent, a tube or wire can be passed through a continuous cylindrical hole of the known lead-through bushing. Although in priciple a single lead-through bushing according to the United States patent should be inserted in a duct of the present sealing device, it is also possible to apply a multiple bushing.

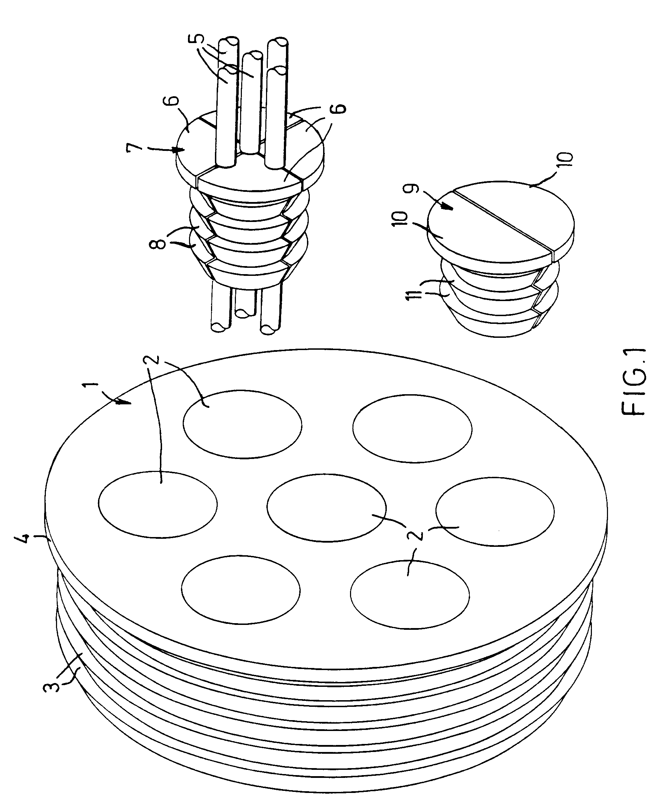

The system according to the invention has a particular advantage in that the sealing device thereof is not composed of segments, contrary to the grommet as claimed in the United States patent No. 3,162,412. The segmental grommet claimed therein features twelve partition walls in the embodiment represented in figure 1. The generally great number of partition walls entails a considerable risk of leakages. In the event of such leakage, either one of the segments of the grommet or the entire grommet will have to be replaced. If one segment is replaced, it is necessary after the change to seal all partition walls involved once again for leak-proofing. Moreover, the presence of partition walls renders a cylindrical shape of this known grommet imperative, because in that case the partition walls are disposed so as to be least vulnerable to high pressures. The sealing device according to the invention, which is a one-piece unit, has none of the above-mentioned drawbacks.

One embodiment of a system according to the invention is characterized in that the system further comprises a rectangular channel provided in a structural component, so that the sealing device can be placed sealingly into the channel. This rectangular design is made possible without any enhanced risk of leakage at least partly because the present sealing device is cast as one complete unit and does not consist of segments. In practice, a rectangular sealing device is of particular importance, because in such instances as ascending tubes, conduits underneath switchboards and locations where a plurality of wires have to be passed through walls or floors it is preferred to cut out rectangular openings.

A further embodiment of a system according to the invention is characterized in that the sealing device thereof contains a number of eccentrically disposed ducts. Such a so-called multiple sealing device may support a number of grommets. A system according to the invention preferably comprises a blind bushing for closing an unused duct.

The invention will be elucidated in more detail with reference to the accompanying drawings, in which
- Figure 1: represents a multiple sealing device with seven continuous ducts in which wire lead-through bushings or blind bushings can be inserted;
- Figure 2: depicts a substantially rectangular sealing device;
and
- Figure 3: shows a substantially rectangular frame with two continuous, substantially rectangular channels.

Figure 1 depicts a cylindrical sealing device 1 with seven smooth-walled cylindrical ducts 2. The sealing device 1 here shown is provided on its outer surface with ridges 3 which are saw-tooth-shaped in cross-section, aligned according to (imaginary) radial sections and practically speaking non-flexible but substantially compressible. To facilitate the insertion of the sealing device 1 into a wall hole, it may be convenient to apply petroleum jelly or some other lubricant to the ridges 3. The insertion is done by forcing a flange 4 against the edge of a wall hole. To eliminate the risk of the sealing device 1 being readily forced out of a wall opening, the ridges 3 have a saw-tooth-shaped configuration in cross-section. In order to achieve a pressure-resistant, gas-, water- and fireproof sealing, the ridges 3 should have an outside diameter exceeding the inside diameter of a wall opening that is to be occluded. In actual practice, the lower end or, as the case may be, the flange end of the sealing device 1 has a pressure resistance of 1 or 2 bar, respectively. When the sealing device 1 has been inserted in a wall opening, the electric wires 5 can be passed through a duct 2. Thereupon, the segmental parts 6 of a lead-through bushing 7 must be disposed round about the electric wires 5 and then, if necessary, forced into a duct 2 by tapping with a mallet. The ridges 8 located on the outer surface of the lead-through bushing 7 have an outside diameter exceeding the inside diameter of a duct 2. In consequence, when the lead-through bushing 7 is inserted by force into a duct 2, not only will the segmental parts 6 grip the electric wires 5 sealingly, but the ridges 8 and the inner wall of a duct 2 will also be compressed sealingly. An unused duct of the sealing device 1 may be closed by, for instance, a blind bushing 9 composed of two segments 10. This bushing 9 also has external ridges 11 whose outside diameter exceeds the inside diameter of a duct to be occluded, thereby affording a leakproof sealing.

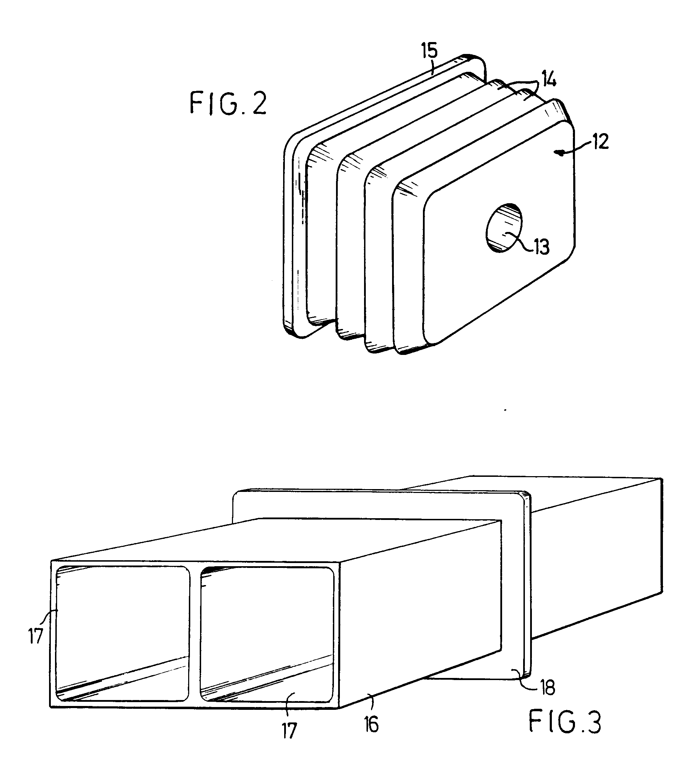

Figure 2 shows a substantially rectangular sealing device 12 having a smooth-walled continuous duct 13. Again, the outer surface of the sealing device 12 is provided with external ridges 14 which are somewhat compressed when the sealing device 12 is inserted by force into a wall opening. Here, too, insertion is carried through to a point where a flange 15 is arrested by the edge of a wall opening. The same type of lead-through bushing as the bushing 7 of Figure 1 can be inserted in the duct 13. For reasons set out hereinbefore, this sealing device 12 also accomplishes a pressure-resistant leakproof sealing.

A substantially rectangular frame 16 with two continuous, substantially rectangular channels 17 is represented in Figure 3. A sealing device 12 according to Figure 2 can be inserted in each channel 17 of the frame 16, which has been made in metal or plastic. The frame 16 is, for instance, embedded in concrete or welded in position in a steel construction and comprises a flange 18 for reinforcement and for enhancing the pressure resistance of the whole. Alternatively, it is possible to accommodate the frame 16 in, for instance, a wooden mould that has already been mounted in a wall opening. The insertion of a sealing device 12 (Figure 2) in a frame 16 previously installed in, for instance, a wall opening has the advantage of permitting the sealing device 12 to be inserted in such a wall opening in a greatly simplified manner.

## Claims

1. System for the sealing passage of a cable, pipe and the like (5) through an opening in a wall or similar barrier, comprising a sealing device (1,12) made of a resilient material such as rubber and provided with at least one, substantially cylindrical, continuous duct (2,13), the outer surface of the sealing device (1,12) being covered with peripheral, axially spaced substantially inflexible but compressible ridges (3,14) aligned in radial sections, characterized in that, the outside diameter of the ridges (3,14) is greater than the inside diameter of the opening, that the inner wall of the at least one duct (2,13) is smooth-walled, and that the system further comprises a lead-through bushing (7) comprising segmental parts (6) to be disposed round the cable or pipe and the like (5) to be passed through, which lead-through bushing (7) can be placed sealingly into the at least one duct (2,13).

2. System according to claim 1, characterized in that the sealing device (1,12) contains a number of eccentrically disposed ducts (2,13).

3. System according to claim 1 or 2, characterized in that the system further comprises a blind bushing (9) for closing an unused duct (2,13).

4. System according to claim 1, 2 or 3, characterized in that the outer surface of at least one bushing (7,9) is covered with circumferential, axially spaced substantially inflexible but compressible ridges (8) aligned in radial sections whose outside diameter is greater than the inside diameter of the duct (2,13).

5. System according to any one of the preceeding claims, characterized in that the system further comprises a rectangular channel (17) provided in a structural component (16), so that the sealing device (1,12) can be placed sealingly into the channel (17).

## Patentansprüche

1. System zur abdichtenden Durchführung eines Kabels, Rohrs oder ähnlichem (5) durch eine Öffnung in einer Wand oder einer ähnlichen Abtrennung, umfassend eine Abdichtvorrichtung (1, 12) aus elastischem Material wie Gummi und mit mindestens einer im wesentlichen zylindrischen, durchgehenden Durchführung (2, 13), wobei die Außenfläche der Abdichtvorrichtung (1, 12) mit außen gelegenen, axsial mit Abstand angeordneten, im wesentlichen unnachgiebigen, aber zusammendrückbaren Graten (3, 14) bedeckt ist, die in radialen Abschnitten ausgerichtet sind, dadurch gekennzeichnet, daß der Außendurchmesser der Grate (3, 14) größer ist als der Innendurchmesser der Öffnung, daß die Innenwand der mindestens einen Durchführung (2, 13) glatt ist, und daß das System weiter eine Durchführungsbuchse (7) umfaßt, die Segmentteile (6) hat, die um das durchzuführende Kabel oder Rohr oder ähnliches anzuordnen sind, welche Durchführungsbuchse (7) abdichtend in die mindestens eine Durchführung (2, 13) eingesetzt werden kann.

2. System nach Anspruch 1, dadurch gekennzeichnet, daß die Abdichtvorrichtung (1, 12) eine Anzahl exzentrisch angeordneter Durchführungen (2, 13) enthält.

3. System nach Anspruch 1 oder 2, dadurch gekennzeichnet, daß das System weiter eine Blindbuchse (9) zum Verschließen einer nicht verwendeten Durchführung (2, 13) umfaßt.

4. System nach Anspruch 1, 2 oder 3, dadurch gekennzeichnet, daß die Außenfläche mindestens einer Buchse (7, 9) mit auf dem Umfang liegenden, axsial mit Abstand angeordneten, im wesentlichen unnachgiebigen, aber zusammendrückbaren Graten (8) bedeckt ist, die in radialen Abschnitten ausgerichtet sind und deren Außendurchmesser größer ist als der Innendurchmesser der Durchführung (2, 13).

5. System nach einem der vorangehenden Ansprüche, dadurch gekennzeichnet, daß das System weiter einen rechteckigen Kanal (17) in einem tragenden Teil (16) umfaßt, so daß die Dichtungsvorrichtung (1, 12) abdichtend in den Kanal (17) eingesetzt werden kann.

## Revendications

1. Système pour le passage étanche d'un câble, d'un tuyau ou analogue (5) à travers une ouverture prévue dans une paroi ou barrière similaire, comportant un dispositif d'étanchéité (1,12) réalisé en un matériau élastique tel que du caoutchouc et prévu avec au moins un conduit continu sensiblement cylindrique (2,13), la surface extérieure du dispositif d'étanchéité (1,12) étant recouverte d'arêtes périphériques espacées axialement sensiblement non-flexibles, mais compressibles (3,14) alignées selon des sections radiales, caractérisé en ce que le diamètre externe des arêtes (3,14) est supérieur au diamètre intérieur de l'ouverture, en ce que la paroi interne d'au moins un conduit (2,13) est lisse et en ce que le système comporte en outre un manchon (7) de guidage comportant des parties en forme de segments (6), qu'il y a lieu de disposer autour du câble ou du tuyau et analogue (5) pour en permettre le passage, lequel manchon de guidage (7) peut être placé de façon étanche à l'intérieur dudit conduit (2,13).

2. Système selon la revendication 1, caractérisé en ce que le dispositif d'étanchéité (1,12) comporte un certain nombre de conduits disposés excentriquement (2,13).

3. Système selon la revendication 1 ou 2, caractérisé en ce que le système comporte en outre un manchon borgne pour assurer la fermeture d'un conduit non-utilisé (2,13).

4. Système selon la revendication 1, 2 ou 3, caractérisé en ce que la surface extérieure d'au moins un manchon (7,9) est recouverte au moyen de nervures circonférentielles, espacées axialement, sensiblement non-flexibles, mais compressibles (8), alignées selon des sections radiales, dont le diamètre externe est plus grand que le diamètre interne du conduit (2,13).

5. Système selon l'une quelconque des revendications précédentes, caractérisé en ce que le système comporte en outre un canal rectangulaire (17) prévu dans un élément structurel (16), de telle sorte que le dispositif d'étanchéité (1,12) peut être placé de façon étanche à l'intérieur du canal (17).
